Europäisches Patentamt

European Patent Office

Office européen des brevets

(11) Publication number: **0 185 890**

**B1**

(12) **EUROPEAN PATENT SPECIFICATION**

(45) Date of publication of patent specification: **26.07.89**

(51) Int. Cl.⁴: **B 65 G 53/66**

(21) Application number: **85113736.4**

(22) Date of filing: **29.10.85**

(54) A method for the transportation of a particulate material at controlled rate.

(30) Priority: **28.12.84 JP 274383/84**

(43) Date of publication of application:
**02.07.86 Bulletin 86/27**

(45) Publication of the grant of the patent:
**26.07.89 Bulletin 89/30**

(84) Designated Contracting States:
**DE FR GB**

(56) References cited:
**EP-A-0 114 916**
**DE-A-2 262 697**
**DE-A-2 612 899**
**DE-A-3 134 180**
**US-A-4 483 646**
**US-A-4 529 336**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**
(73) Proprietor: **DENKA CONSULTANT &**
**ENGINEERING CO., LTD.**
**4-1, Yurakucho 1-chome Chiyoda-ku**
**Tokyo (JP)**

(72) Inventor: **Maki, Yunosuke**
**1-14-8 Minamicho**
**Chiba Chiba-ken (JP)**
Inventor: **Watanabe, Yoichi**
**1351-E1007 Sonnocho**
**Chiba Chiba-ken (JP)**
Inventor: **Sakaguchi, Yasuhiko**
**1351-C606 Sonnocho**
**Chiba Chiba-ken (JP)**
Inventor: **Tanaka, Kazuaki**
**1-20-5 Ichikawa**
**Ichikawa Chiba-ken (JP)**
Inventor: **Kobayashi, Yuichi c/o Denka**
**Consultant and**
**Engineering Co.,Ltd. 1-4-1 Yurakucho**
**Chiyoda-ku Tokyo (JP)**
Inventor: **Ooishi, Hideo c/o Denka Consultant**
**and**
**Engineering Co.,Ltd. 1-4-1 Yurakucho**
**Chiyoda-ku Tokyo (JP)**

Courier Press, Leamington Spa, England.

**EP  0 185 890  B1**

(72) Inventor: **Kobayashi, Minoru c/o Denka
Consultant and
Engineering Co.,Ltd. 1-4-1 Yurakucho
Chiyoda-ku Tokyo (JP)**

(74) Representative: **Altenburg, Udo, Dipl.-Phys.
et al
Patent- und Rechtsanwälte Bardehle-
Pagenberg-Dost-Altenburg-Frohwitter & Partner
Postfach 86 06 20
D-8000 München 86 (DE)**

## Description

Background of the invention

The present invention relates to a method for the pneumatic transportation of a particulate material at controlled rate or, more particularly, to a method for the pneumatic transportation of a particulate material in which, when an external disturbance is rapidly absorbed to maintain the acting capacity of the transportation system at a preset level or, when the preset level of the transportation rate is changed, the desired new transportation rate can rapidly be established with self-correctability of the transportation capacity in compliance with the changes in the properties of the particulate material under transportation.

In order that the present invention may be clearly understood, the nearest prior art, namely EP—A—0 114 916 (Kawasaki Steel Corp.) will first be considered.

In this earlier document there is disclosed a method of distributing powdered or granular material to a plurality of feeding ends in a system having a pressurized tank for pressurizing and fluidizing a powdered or granular material, a plurality of transportation pipes having one ends constituting discharge nozzles opening above a fluidized bed in the tank and the other ends connected to different feeding ends so as to introduce the material to the feeding ends, and a plurality of booster gas supply pipes for supplying respective transportation pipes with a booster gas. The internal pressure of the tank is controlled by a controller provided with a set valve in accordance with the mean value of the terminal pressures at the feeding ends, the mean value of predetermined set of flow rates of the booster gas in the booster gas supplying pipes, and the mean value of predetermined set rates of transportation of material to the feeding ends.

In this prior art, therefore, the pressure in the pressurizing tank depends upon several mean values and the overall process is thus regulated as a whole by these mean values. Disadvantages can result from a method of control.

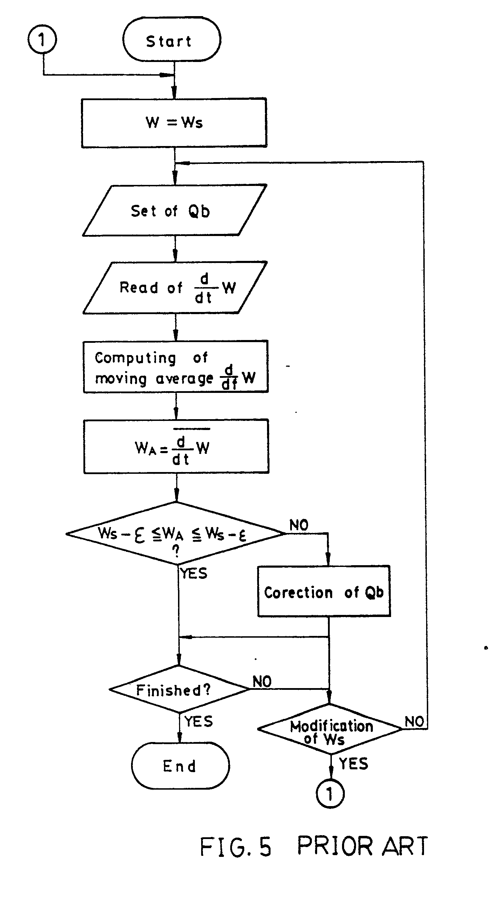

In a conventional pneumatic transportation system of a particulate material, as is illustrated in Figure 5 of the accompanying drawing, presetting of the desired transportation rate Ws is followed by the setting of the flow rate Qb of the booster gas and the pressure Pt in the pressure tank determined by the preliminary calibration running before the actual operation of the system. The actual transporation rate WA of the particulate material under transportation is measured as a differential value of the output signal from the weighing instrument of the pressure tank and/or by means of a flow meter for a particulate material installed on the way of the transportation piping. The flow rate Qb of the booster gas is controlled by means of a flow rate controller installed on the way of the supply line of the booster gas in accordance with the deviation of the actual transportation rate WA from the preset value Ws of the desired transportation rate so as to maintain the transportation rate W of the particulate materials at the preset level Ws.

When the transportation system under the above described control means receives certain external disturbance such as fluctuation of the pressure Pb in the receiving unit or the pressure Pt in the pressure tank and presence of a foreign body in the transportation piping, a considerable length of time lag is unavoidable before the conversion of the actual transportation rate WA of the particulate material to the preset value Ws of the desired transportation rate even by providing each of the detectors and controllers with the highest sensitivity because the controlling movement of the controller is started only after the detection of the increment or decrement in the actual transportation rate WA of the particulate material under transportation. A simlar problem is also encountered when the properties of the particulate material are under variation from lot to lot or when the preset value Ws of the desired transportation rate is changed.

## SUMMARY OF THE INVENTION

An object of the present invention is therefore, in view of the above described problems and disadvantages in the conventional transportation system of a particulate material, to provide a novel method for controlling the rate of pneumatic transportation of a particulate material with high stability and accuracy to rapidly respond to any external disturbance added to the system.

To this end the present invention provides a method for controlling the rate of pneumatic transportation of a particulate material in a transportation apparatus equipped with detector means for detecting the transportation rate of the particulate material, in which a pipe for booster gas is connected to at least one pneumatic pipe for transportation of said material through said pneumatic pipe, the pneumatic pipe having its intake opening at a fluidizing bed in a pressure tank filled with the particulate material and its discharge opening at a receiving unit; said method comprising:

calculating for each pneumatic transportation pipe the target value of the flow rate of the booster gas through the pneumatic transportation pipe from the target value of the desired transportation rate of the particulate material; and the pressure drop in the pneumatic transportation pipe expressed by the difference between the pressure in the pressure tank and the pressure in its receiving unit; and controlling the flow rate of the booster gas on the basis of the thus calculated value.

## BRIEF DESCRIPTION OF THE DRAWING

Figure 1 is a system diagram of the apparatus used in practicing the method of the invention.

Figure 2 is a modified flow chart illustrating the controlling method of transportation according to the invention.

# EP 0 185 890 B1

Figure 3 is a flow chart illustrating the controlling method of transportation according to the invention.

Figure 4 is a graph showing the relationship between the flow rate of the booster gas and the transportation rate.

Figure 5 is a flow chart illustrating the conventional controlling method of transportation rate.

## DETAILED DESCRIPTION OF THE PREFERRED EMBODIMENTS

The method of the present invention is applicable to an apparatus for pneumatic transportation of a particulate material at a controlled rate in which the particulate material fluidized in a pressure tank is transferred through one or more of pneumatic pipes into one or respective receiving units. A booster gas is supplied to the pneumatic pipes and the apparatus is equipped with a weight detector or a combination of a weight detector and a mass flow meter to detect the flow rate of the particulate material.

The present invention provides a method for controlling the flow rate of a particulate material under pneumatic transportation at a controlled rate comprising, taking the flow rate of the booster gas supplied to the pneumatic pipe as $Qb$, the pressure in the pressure tank as $Pt$, the pressure in the receiving unit as $Pb$ and the preset value of the desired transportation rate of the particulate material from the pressure tank to the receiving unit as $W$, calculating the flow rate of the booster gas corresponding to $Pt - Pb - Pw$ or, that is, the difference between the pressure drop in the pneumatic pipe given by $Pt - Pb$ and the pressure drop $\Delta Pw$ when the flow rate of the particulate material is $W$ and controlling the flow rate of the booster gas on the basis of the thus calculated value so as to maintain the actual transportation rate of the particulate material at the desired preset value.

The invention also provides a method for controlling the flow rate of a particulate material under pneumatic transportation at a controlled rate in which the actual flow rate of the particulate material is maintained at the desired preset value by concurrently controlling the pressure $Pt$ (kg/cm$^2$) in the pressure tank and the flow rate of the booster gas $Qb$(m$^3$/min) on the basis of the above mentioned result of the calculation in the case where the minimum flow rate in the pneumatic pipe $V$ (m/sec) is calculated by the equation

$$V = Qb \times 1/A \times 1/60 \times 1.033/(1.033 + Pt), \tag{1}$$

in which $A$(m$^2$) is the cross sectional area of the pneumtic pipe. When the minimum velocity $V$ is smaller than the critical flow rate $V_{lim}$ inherent to the particulate material under transportation or where the calculated flow rate $Qb$ of the booster gas is larger than the upper limit $Qb_{max}$ of the booster gas restricted by the capacity of the utility source.

Further, the invention provides a method for controlling the flow rate of a particulate material under pneumatic transportation at a controlled rate in which, when the actual flow rate of the particulate material $WA$ deviates from the desired preset value of the flow rate $Ws$ by a difference $\Delta W$ for one or more reasons such as the variation in the properties of the particulate material from the calibration running to actual load running, the operation of the calculation is performed by replacing the desired preset value of the flow rate with $W - \Delta W$ so that correction is made for the deviation $\Delta W$.

Two alternative equations (2) and (2') below are available for the actual calculation of the flow rate $Qb$(Nm$^3$/min) of the booster gas from the pressure drop in the pneumatic pipe:

$$Qb = -K_2W + \sqrt{(K_2W)^2 + (1/K_1)(Pt - Pb)(2 + Pt + Pb)} \tag{2}$$

and

$$Qb = \sqrt{K_1(2 + Pt + Pb)(Pt - Pb - K_2W)} \tag{2'}$$

in which $K_1$ and $K_2$ are each a constant determined by the physical properties of the particulate material and the dimensional parameters of the pneumatic pipe;

The equation (2) is applicable to the range where the solid-gas ratio KG.S/KG.G is relatively small while the equation (2') is applicable where the ratio is relatively large although no definite demarcation can be given between the applicable ranges of these two equations. In the following, explanations are given with reference to the equation (2).

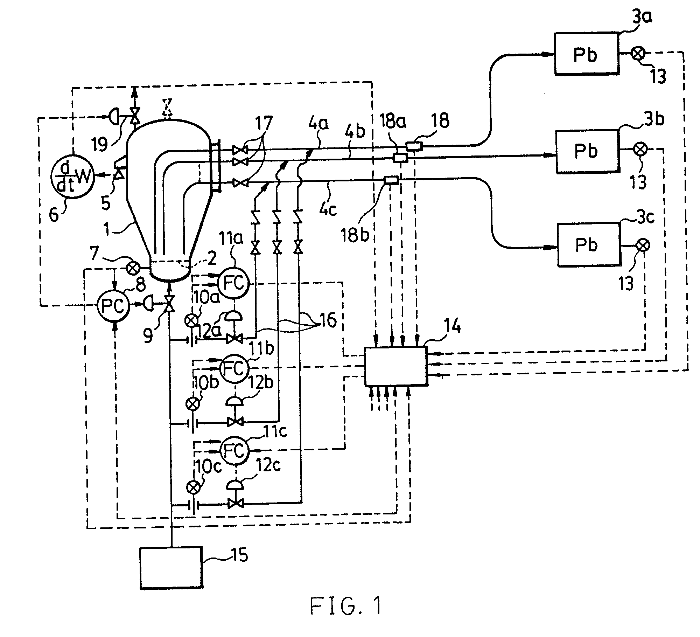

Figure 1 illustrates the system diagram of a typical example of the apparatus for practicing the method of the present invention. In the appartus, the pressure tank 1 is provided with a fluidizing bed 2 and a weighing instrument 5 and the particulate material in the pressure tank 1 is transferred pneumatically by the booster gas supplied from the booster gas feed line 16 connected to the transfer valve 17 in the vicinity of the secondary side thereof through the pneumatic pipes 4a, 4b, 4c each opening at one end on the fluidizing bed 2 and opening at the other end in the respective receiving unit 3a, 3b or 3c.

The pressure $Pt$ in the pressure tank 1 is detected in the pressure detector 7 where it is converted into an electric signal and inputted to the pressure regulator 8 and the operation controller 14. The control signal from the operation controller 14 in turn serves to control the pressure at a constant level by operating the pressure regulator valve 9 or the discharge pressure regulator valve 19.

4

EP 0 185 890 B1

The pressure in the receiving units 3a, 3b and 3c is detected in the pressure detector 13 and the signal thereof is inputted to the operation controller 14.

The flow rate of the booster gas Qb is detected in the flow rate detectors 10a, 10b, 10c and converted into electric signals to be taken into the flow rate regulators 11a, 11b, 11c and the operation controller 14 so that the flow rate is regulated by means of the flow rate regulator valves 12, 12b, 12c operated by the control signals from the operation controller 14.

The transportation rate of the particulate material is inputted to the operation controller 14 in the form of a value obtained by processing the output signal from the weighing instrument 5 of the pressure tank 1 in the differential calculator 6 and/or an output signal from the flow rate meters for particulate material 18a, 18b, 18c installed on the way of the pneumatic pipes.

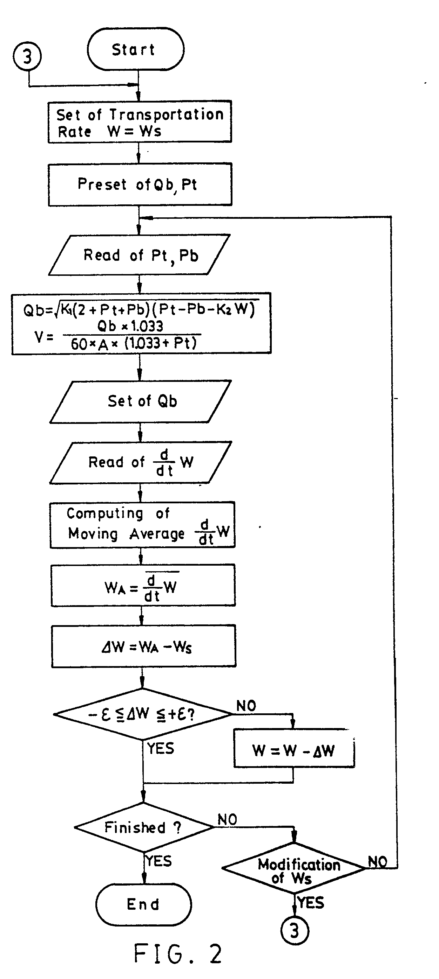

In the following, the operation of the above described apparatus is explained with reference to Figure 2 showing a flowe chart for the transfer route from the pressure tank 1 to the receiving unit 3 through the pneumatic pipe 4.

The operation of the apparatus is started by setting the flow rate Qb of the booster gas and the pressure Pt in the pressure tank 1 determined in a preliminary calibration running in accordance with the desired preset value of the transportation rate Ws of the particulate material.

The signals of the pressure Pt in the pressure tank 1 and the pressure Pb in the receiving unit 3 are inputted to the operation controller 14 after every cycle of scanning where the flow rate Qb of the booster gas is calculated using the equation (2) given above and the results of the calculation are converted to control signals which serve to modify the target value of the flow rate regulator 11 so as to constantly give correction to the flow rate Qb of the booster gas. In the same time, the operation controller 14 calculates the minimum flow rate V in the pneumatic pipe using the equation (1) given above.

The signal of the actual flow rate WA of the particulate material under transportation is unintermittently inputted to the operation controller 14 in the form of a value obtained by processing the output signal from the weighing instrument 5 of the pressure tank 1 in the differential calculator 6 and/or the output signal from the flow rate meter 18 for particulate material installed on the way of the pneumatic pipe to be compared with the preset value Ws of the desired transportation rate and give the deviation $\Delta W$ therefrom.

An explanation is given on the influence of an external disturbance taking the increase in the pressure Pb in the receiving unit 3 as an example. In the constant-level control of the flow rate of the booster gas in a usual manner, the actual flow rate WA of the particulate material under transportation is decreased by a decrement corresponding to the increase in the pressure Pb in the receiving unit 3. In the conventional method for control in which the flow rate WA of the particulate material under transportation is maintained at a constant level by decreasing the target value of the flow rate regulator 11 of the booster gas after detection of the decrease in the flow rate WA of the particulate material, a time lag is always unavoidable before conversion of the flow rate WA of the particulate material to the preset value of the desired transportation rate Ws.

In the controlling method of the present invention, on the other hand, the output signal from the internal pressure detector 13 of the receiving unit 3 is unintermittently inputted to the operation controller 14 where the flow rate Qb of the booster gas is calculated using the equation (2) to give a result used for the control thereof so that the target value in the flow rate regulator 11 of the booster gas can be decreased in real-time in the moment when the internal pressure Pb in the receiving unit 3 begins to increase almost without a time lag to maintain the actual flow rate WA of the particulate material under transportation at a constant level.

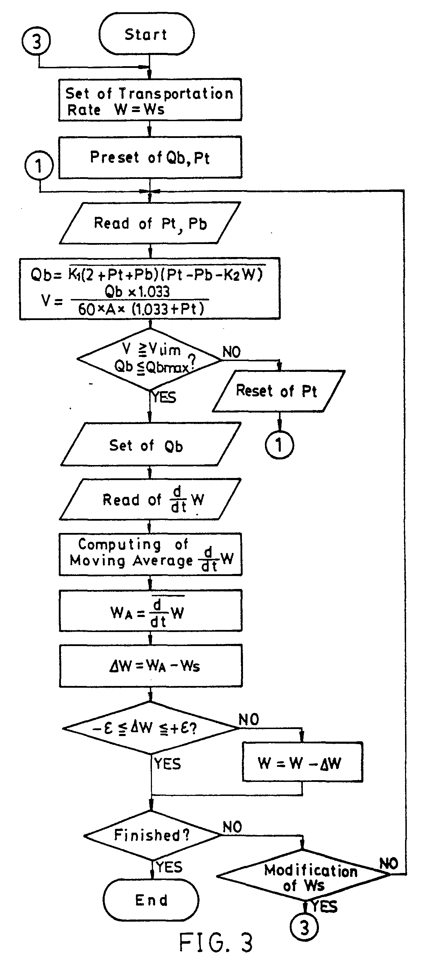

Figure 3 illustrates a revised flow chart derived from Figure 2, involving a check step of the pressure in the pressure tank Pt.

Along with the above mentioned calculation of the flow rate Qb of the booster gas, the operation controller 14 calculates the minimum flow rate V in the pneumatic pipe using the equation (1) and, when the minimum flow rate V in the pneumatic pipe is smaller than the critical flow rate of transportation $V_{llm}$ inherent to the particular particulate material under transportation, the operation controller 14 outputs a control signal to gradually increase the target value of the pressure regulator 8 so that the pressure in the pressure tank Pt is gradually increased. Needless to say, in this case, the flow rate Qb of the booster gas is also calculated in the operation controller 14 using the equation (2) and controlled.

The above described effect is not limited to the case of the increased internal pressure Pb in the receiving unit 3 but similar effects can be obtained, needless to say, also in the cases of a decreased internal pressure Pb in the receiving unit 3, varied internal pressure Pt in the pressure tank 1, variation in the actual flow rate WA of the particulate material due to a foreign body in the pneumatic pipe eventually entering it and changed preset value of the transportation rate Ws.

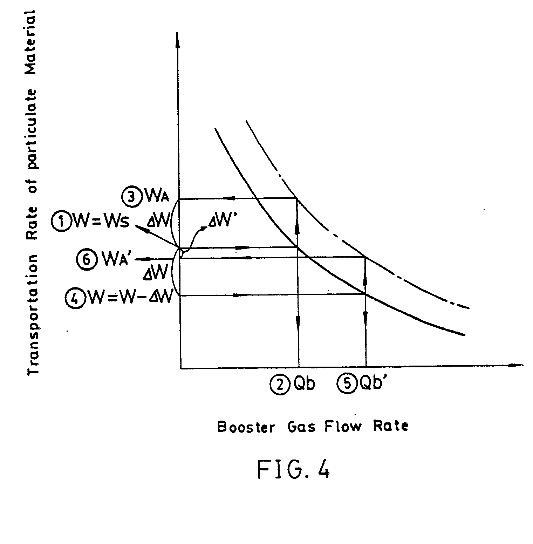

In an actual transportation system of a particulate material, it is not rare that the physical properties of the particulate material are subject to variation from lot to lot as received. Whereas a change in a physical property of the particulate material may result in the loss of the appropriateness of the constants $K_1$ and $K_2$ in the equation (2) originally determined by the preliminary calibration running, the controlling method of the present invention is practiced to replace the target value W for the transportation rate of the particulate material in the operation controller 14, without modifying the values of the constants $K_1$ and $K_2$, with (W − $\Delta W$) in accordance with the deviation $\Delta W$ of the actual flow rate WA of the particulate material under

5

transportation from the preset value Ws of the desired transportation rate so that the deviation ΔW is self-corrected. To give an explanation of this effect with reference to Figure 4, the corrected flow rate Qb' of the booster gas is determined from the target value W of the transportation rate and the calibration curve for the transportation rate in the steps of setting of the transportation rate at Ws, determination of the flow rate Qb of the booster gas from the calibration curve, determination of the transportation rate WA of the particulate material in the transportation system corresponding to the value of Qb and replacement of the target value W of the transportation rate with (W − ΔW) in which ΔW is the deviation of the actual flow rate WA of the particulate material from the target value W. The deviation ΔW can be compensated almost completely by repeating the above described process subsequent to the determination of the value of WA.

As is described above, the controlling method of the present invention is useful in the pneumatic transportation of a particulate material at a controlled rate with a highly accurate stability of the rate and rapid response to any external disturbance added to the transportation system and to any change in the preset value of the desired transportation rate. In addition, the inventive method provides a means of self-correction for the variation of the physical properties of the particulate material in the pneumatic transportation of the particulate material at a controlled rate. The method of the present invention is particularly effective when the above mentioned receiving unit 3 is a blast furnace, an open-hearth furnace or a boiler into which a particulate fuel is blown as being carried by a gas although the type of the receiving unit 3 is not particularly limitative including any conventional vessels used under normal pressure.

## Claims

1. A method for controlling the rate of pneumatic transportation of a particulate material in a transportation apparatus equipped with detector means for detecting the transportation rate of the particulate material, in which a pipe for booster gas is connected to at least one pneumatic pipe for transportation of said material through said pneumatic pipe, the pneumatic pipe having its intake opening at a fluidizing bed in a pressure tank filled with the particulate material and the discharge opening at a receiving unit; said method comprising:
calculating for each pneumatic transportation pipe the target value of the flow rate of the booster gas through the pneumatic transportation pipe from the target value of the desired transportation rate of the particulate material; and the pressure drop in the pneumatic transportation pipe expressed by the difference between the pressure in the pressure tank and the pressure in its receiving unit; and controlling the flow rate of the booster gas on the basis of the thus calculated value.

2. A method as in Claim 1, characterized by concurrently controlling the pressure in the pressure tank when the thus calculated value of the flow rate of the booster gas exceeds the capacity of the source of the pressurizing gas, or when the minimum flow rate of the booster gas in the pneumatic transportation pipe calculated on the base of the thus calculated flow rate of the booster gas is smaller than the critical flow rate for transportation inherent to the particulate material under transportation.

3. The method as claimed in Claim 1 characterized by detecting the deviation ΔW of the actual transportation rate of the particulate material WA from the preset value of the desired transportation rate Ws and performing the calculation by replacing the target value of the transportation rate W with (W − ΔW) so as to correct the deviation ΔW.

4. The method as claimed in claim 1 where the flow rate Qb of the booster gas in $Nm^3$/hour is controlled on the base of the output calculated by use of an equation

$$Qb = -K_2W + \sqrt{(K_2W)^2 + (1/K_1)(Pt - Pb)(2 + Pt + Pb)} \qquad (2)$$

or

$$Qb = \sqrt{K_1(2 + Pt + Pb)(Pt - Pb - K_2W)} \qquad (2')$$

in which Pt is the pressure in the pressure tank in $kg/cm^2$, Pb is the pressure in the receiving unit in $kg/cm^2$, W is the target value of the transportation rate in kg/min and $K_1$ and $K_2$ are each a constant determined by the kind of the particulate material under transportation and the dimensional parameters of the pneumatic transportation pipe.

## Patentansprüche

1. Verfahren zum Steuern der Rate von pneumatisch transportiertem Teilchenmaterial in einer Transportvorrichtung, die mit einer Detektoreinrichtung zum Detektieren der Transportrate des Teilchenmaterials ausgerüstet ist, in der ein Rohr für ein Hilfsgas mit wenigstens einem Pneumatikrohr für den Transport des Materials durch das Pneumatikrohr verbunden ist, wobei das Pneumatikrohr seine Einlaßöffnung an einem Wirbelbett in einem Drucktank hat, der mit dem Teilchenmaterial gefüllt ist, und seine Auslaßöffnung an einer Empfangseinheit vorliegt; wobei das Verfahren aufweist:
Berechnen des Zielwerts der Flußrate des Hilfsgases durch das pneumatische Transportrohr aus dem Zielwert der gewünschten Transportrate des Teilchenmaterials für jedes pneumatische Transportrohr; und des Druckabfalls in dem pneumatischen Transportrohr, der durch die Differenz zwischen dem Druck im Drucktank und dem Durch in seiner Empfangseinheit ausgedrückt ist; und Steuern der Flußrate des Hilfsgases auf der Basis des so berechneten Wertes.

2. Verfahren nach Anspruch 1, gekennzeichnet durch gleichzeitiges Steuern des Drucks im Drucktank, wenn der so berechnete Wert der Flußrate des Hilfsgases die Kapazität der Versorgungsquelle des Druckgases überschreitet, oder wenn die minimale Flußrate des Hilfsgases in dem pneumatischen Transportrohr, die auf der Basis der so berechneten Flußrate des Hilfsgases berechnet wird, kleiner ist als die kritische Flußrate für den Transport, die dem Teilchenmaterial beim Transport eigen ist.

3. Verfahren nach Anspruch 1, gekennzeichnet durch Detektieren der Abweichung $\Delta W$ der tatsächlichen Transportrate des Teilchenmaterials WA von dem Vorgabewert der gewünschten Transportrate Ws und Durchführen der Berechnung durch Ersetzen des Zielwertes der Transportrate W durch $(W - \Delta W)$, um die Abweichung $\Delta W$ zu korrigieren.

4. Verfahren nach Anspruch 1, dadurch gekennzeichnet, daß die Flußrate Qb des Hilfsgases in Nm$^3$/Std. auf Basis des Ausgangs gesteuert wird, der unter Verwendung einer Gleichung berechnet wird

$$Qb = -K_2W + \sqrt{(K_2W)^2 + (1/K_1)\,(Pt - Pb)\,(2 + Pt + Pb)} \qquad (2)$$

oder

$$Qb = \sqrt{K_1\,(2 + Pt + Pb)(Pt - Pb - K_2W)} \qquad (2')$$

wobei Pt der Druck im Drucktank in kg/cm$^2$, Pb der Druck in der Empfangseinheit in kg/cm$^2$, W der Zielwert der Transportrate in kg/min und $K_1$ und $K_2$ jeweils eine Konstante sind, die durch die Art des Teilchenmaterials unter Transport und den Dimensionsparametern des pneumatischen Transportrohrs bestimmt werden.

**Revendications**

1. Procédé de réglage du débit de transport pneumatique d'une matière particulaire dans un appareil de transport équipé d'un dispositif de détection du débit de transport de la matière particulaire, dans lequel une tuyauterie de gaz de surpression est connectée à au moins une tuyauterie pneumatique afin que la matière soit transportée dans la tuyauteria pneumatique, cette dernière ayant son ouverture d'admission placée au noveau d'un lit de fluidisation formé dans un réservoir sous pression rempli de la matière particulaire et ayant son ouverture d'évacuation placée au niveau d'un ensemble de réception, ledit procédé comprenant:
le calcul, pour chaque tuyauterie de transport pneumatique, de la valeur de consigne du débit du gaz de surpression dans la tuyauterie de transport pneumatique à partir de la valeur de consigne du débit voulu de transport de la matière particulaire et de la perte de charge dans la tuyauteria de transport pneumatique, exprimés par la différence entre la pression régnant dans le réservoir sous pression et la pression régnant dans son ensemble de réception, et le réglage du débit du gaz de surpression en fonction de la valeur ainsi calculée.

2. Procédé selon la revendication 1 caractérisé par le réglage simultané de la pression dans le réservoir sous pression lorsque la valeur ainsi calculée du débit du gaz de surpression dépasse la capacité de la source du gaz de mise sous pression, ou lorsque le débit minimal du gaz de surpression dans la tuyauterie de transport pneumatique calculé d'après le débit ainsi calculé du gaz de surpression est inférieur au débit critique de transport propre à la matière particulaire transportée.

3. Procédé selon la revendication 1, caractérisé par la détection de l'écart $\Delta W$ entre le débit réel de transport de la matière particulaire WA et la valeur de consigne du débit voulu de transport Ws et l'exécution du calcul en remplaçant la valeur de consigne du débit réel de transport W par $(W - \Delta W)$ de manière à corriger l'écart $\Delta W$.

4. Procédé selon la revendication 1, caractérisé en ce que le débit Qb du gaz de surpression en Nm$^3$/heure est contrôlé sur la base du débit de sortie calculé par l'équation

$$Qb = -K_2W + \sqrt{(K_2W)^2 + (1/K_1)\,(Pt - Pb)\,(2 + Pt + Pb)} \qquad (2)$$

ou

$$Qb = \sqrt{K_1\,(2 + Pt + Pb)(Pt - Pb - K_2W)} \qquad (2')$$

dans laquelle Pt est la pression dans le réservoir préssurisé en kg/cm$^2$, Pb est la pression dans l'ensemble de réception en kg/cm$^2$, W est la valeur de consigne du débit de transport en kg/min, et $K_1$ et $K_2$ sont des constantes déterminées par le type de matière particulaire transportée et les paramètres dimensionnels de la tuyauterie de transport pneumatique.

FIG. 1

Start

③

Set of Transportation
Rate   W = Ws

Preset of Qb, Pt

Read of Pt, Pb

$$Qb = \sqrt{K_1 (2 + Pt + Pb)(Pt - Pb - K_2 W)}$$
$$V = \frac{Qb \times 1.033}{60 \times A \times (1.033 + Pt)}$$

Set of Qb

Read of $\dfrac{d}{dt} W$

Computing of
Moving Average $\dfrac{d}{dt} W$

$W_A = \overline{\dfrac{d}{dt} W}$

$\Delta W = W_A - W_S$

$-\varepsilon \leqq \Delta W \leqq +\varepsilon ?$   NO

YES        $W = W - \Delta W$

Finished ?   NO

YES

Modification
of Ws        NO

End

YES

③

# FIG. 2

**Flowchart:**

③ ─→ **Start**

**Set of Transportation Rate W = Ws**

① **Preset of Qb, Pt**

**Read of Pt, Pb**

$$Qb = K_1(2+Pt+Pb)(Pt-Pb-K_2W)$$
$$V = \frac{Qb \times 1.033}{60 \times A \times (1.033+Pt)}$$

$V \geqq V_{lim}$ , $Qb \leqq Qb_{max}$ ? — NO → **Reset of Pt** → ①

YES ↓

**Set of Qb**

**Read of $\frac{d}{dt}W$**

**Computing of Moving Average $\frac{d}{dt}W$**

$$W_A = \overline{\frac{d}{dt}W}$$

$$\Delta W = W_A - W_S$$

$-\varepsilon \leqq \Delta W \leqq +\varepsilon$ ? — NO → **W = W − ΔW**

YES ↓

**Finished?** — NO → **Modification of Ws** — NO →

YES ↓     YES ↓

**End**     ③

**FIG. 3**

FIG. 4

FIG. 5  PRIOR ART